# EUROPÄISCHE PATENTANMELDUNG

(11) **EP 4 119 829 A1**
(43) Veröffentlichungstag der Anmeldung: **18.01.2023**
(21) Anmeldenummer: 22194658.5
(22) Anmeldetag: 29.06.2017
(51) Int. Cl.: F16L 19/02

(54) **ROHRVERBINDUNG**

(62) Teilanmeldung aus: 17178823.5
(71) Anmelder: SERTO Holding AG, 8500 Frauenfeld (CH)
(72) Erfinder: HEUSSER, Michael, 8580 Sommeri (CH)
(74) Vertreter: EGLI-EUROPEAN PATENT ATTORNEYS

(57) **Zusammenfassung**

Rohrverbindung mit einem ersten Rohrelement (10), einem Anschlusselement (20) und einem Verdrehsicherungselement (30), wobei das Anschlusselement (20) ausgebildet ist, ein zweites Rohrelement (40) mit dem ersten Rohrelement (10) über einen Flansch (50) dicht zu verbinden. Das Verdrehsicherungselement (30) ist auf dem zweiten Rohrelement (40) anbringbar und ausgebildet, mit dem ersten Rohrelement (10) in Eingriff zu gelangen, um eine Rotation des ersten Rohrelements (10) relativ zu dem zweiten Rohrelement (40) zu verhindern. In einem ersten Zustand ist das Verdrehsicherungselement (30) ausser Eingriff mit dem ersten Rohrelement (10) und relativ zu dem zweiten Rohrelement (40) verdrehbar. In einem zweiten Zustand ist das Verdrehsicherungselement (30) mit dem ersten Rohrelement (10) in Eingriff. Im zweiten Zustand ist ferner das erste Rohrelement (10) mit dem zweiten Rohrelement (40) mittels des Anschlusselements (20) über den Flansch (50) so verbindbar, dass der Flansch (50) und damit das zweite Rohrelement (40) gegen ein Verdrehen relativ zum Verdrehsicherungselement (30) gesichert sind und dass das Verdrehsicherungselement (30) gegen ein Verdrehen relativ zum ersten Rohrelement (10) gesichert ist, sodass das erste Rohrelement (10) und das zweite Rohrelement (40) gegen Verdrehen relativ zueinander gesichert sind.

## Beschreibung

Die vorliegende Erfindung bezieht sich auf eine Rohrverbindung und auf ein Verfahren zum Verbinden von Rohrelementen einer Rohrverbindung.

Aus der Druckschrift EP 2 212 593 B1 ist eine Dichtverbindung bekannt, bei der an den beiden zu verbindenden Rohrelementen jeweils eine stirnseitige Verzahnung angebracht ist. Durch das Ineinandergreifen der Verzahnungen beim Schliessen der Rohrverbindung wird erreicht, dass die Dichtverbindung gegen Verdrehen gesichert ist. Die Dichtverbindung weist ferner eine separate Dichtung auf. Die Dichtung wird beim Schliessen der Rohrverbindung mittels einer Hohlmutter, die auf einem der Rohrelemente angebracht ist und auf ein am anderen Rohrelement angebrachten Aussengewinde aufgeschraubt wird, gepresst. Dabei verformt sich die Dichtung, wodurch die gewünschte Dichtwirkung erzielt wird. Da die Verzahnungen beim Schliessen der Dichtverbindung ineinandergreifen müssen, sind die Rohrelemente beim Schliessen der Dichtverbindung genau aufeinander auszurichten, wodurch der Aufwand beim Zusammenbauen der Dichtverbindung erheblich gesteigert wird. Ferner können aufgrund der Verzahnungen die Rohrelemente nur in vorgegebenen Positionen miteinander verbunden werden, d.h. die relative Orientierung der Rohrelemente zueinander ist durch die Position vorgegeben, in denen ein Ineinandergreifen der Verzahnungen möglich ist. Dies ist insbesondere problematisch, wenn die Rohrelemente nicht rotationssymmetrisch, beispielsweise gekrümmte Rohrelemente oder mit Anschlusselementen verbundene Rohrelemente sind. Ausserdem müssen die Verzahnungen ineinander gesteckt werden. Die dazu erforderliche Bewegung der Rohrelemente erhöht den Aufwand beim Zusammenbauen der Dichtverbindung massgeblich.

Dies ist insbesondere dann der Fall, wenn das Zusammenbauen der Dichtverbindung unter räumlich beengten Bedingungen oder an schwer zugänglichen Stellen zu erfolgen hat, sodass das Zusammenbauen in solchen Fällen unter Umständen sogar überhaupt unmöglich ist. Darüber hinaus hat die Verformung der Dichtung beim Schliessen der Dichtverbindung zur Folge, dass die Dichtung nicht wiederverwendet werden kann, nachdem die Dichtverbindung wieder auseinandergebaut worden ist, oder dass bei Wiederverwendung eine erheblich geringere Dichtwirkung zu erwarten ist.

Aus der DE 10 2013 018 644 A1 ist eine ähnliche Vorrichtung zum koaxialen Verbinden zweier Rohrleitungen, die an den Rohrleitungen angebracht sind und beim Schliessen der Rohrverbindung ineinandergreifende Verzahnungen und einen separaten Dichtring aufweisen, bekannt.

Aus der US 5,066,051 A ist eine Kupplung bekannt, mit der flanschartige Strukturen zweier rohrförmiger Elemente über einen Metalldichtring miteinander verbunden werden. Die Kupplung weist ein Anti-Dreh-Element auf, welches die flanschartigen Strukturen umschliesst, sodass beim Verschrauben der Kupplung mittels Schraubenmuttern kein Drehmoment auf die flanschartigen Strukturen übertragen wird.

Aus der EP 0 482 865 A2 ist eine Kupplung zum Verbinden zweier rohrförmiger Elemente über eine Dichtung bekannt. Diese Kupplung weist ein Anti-Drehmoment-Element mit derselben Funktionsweise wie das in der US 5,066,051 A beschriebene Anti-Dreh-Element auf.

Bei herkömmlichen Rohrverbindungen, insbesondere bei herkömmlichen Rohrverbindungen aus Edelstahl ist die Anwendung eines Schmiermittels erforderlich. Das Schmiermittel muss dabei vor der ersten Verwendung und jeder Wiederverwendung eines Klemmrings der Rohrverbindung aufgetragen werden. Als Schmiermittel kommen beispielsweise Schmierfett oder Silber zum Einsatz.

Eine Aufgabe der vorliegenden Erfindung besteht darin, eine verbesserte Rohrverbindung sowie ein verbessertes Verfahren zum Verbinden von Rohrelementen einer Rohrverbindung zur Verfügung zu stellen.

Diese Aufgabe wird gelöst durch eine Rohrverbindung gemäss Anspruch 1 und ein Verfahren gemäss Anspruch 16. Weiterbildungen der Erfindung sind in den Unteransprüchen angegeben. Die in den Unteransprüchen zur Rohrverbindung genannten Merkmale und die auf die Rohrverbindung bezogenen, weiter unten in der Beschreibung angeführten Merkmale können auch als Weiterbildung des erfindungsgemässen Verfahrens verstanden werden, und umgekehrt.

Die erfindungsgemässe Rohrverbindung umfasst ein erstes Rohrelement mit einem ersten Kanal zur Durchleitung eines strömenden Mediums, ein Anschlusselement und ein Verdrehsicherungselement, wobei das Anschlusselement ausgebildet ist, ein zweites Rohrelement, das einen zweiten Kanal zum Durchleiten des strömenden Mediums aufweist, mit dem ersten Rohrelement über einen am zweiten Rohrelement vorgesehenen Flansch dicht zu verbinden, sodass das strömende Medium zwischen dem ersten Kanal und dem zweiten Kanal strömen kann, wobei das Verdrehsicherungselement auf dem zweiten Rohrelement anbringbar ist und ausgebildet ist, mit dem ersten Rohrelement in Eingriff zu gelangen zum Verhindern einer Rotation des ersten Rohrelements relativ zu dem zweiten Rohrelement, wobei in einem ersten Zustand, in dem das Verdrehsicherungselement ausser Eingriff mit dem ersten Rohrelement ist, das Verdrehsicherungselement relativ zu dem zweiten Rohrelement verdrehbar ist und wobei in einem zweiten Zustand, in dem das Verdrehsicherungselement mit dem ersten Rohrelement in Eingriff ist, das erste Rohrelement mit dem zweiten Rohrelement mittels des Anschlusselements über den Flansch so verbindbar ist, dass der Flansch (50) gegen ein Verdrehen relativ zum Verdrehsicherungselement (30) gesichert ist und dass das Verdrehsicherungselement (30) gegen ein Verdrehen relativ zum ersten Rohrelement (10) gesichert ist und dass das erste Rohrelement und das zweite Rohrelement gegen Verdrehen relativ zueinander gesichert sind.

Mittels einer Rohrverbindung werden üblicherweise ein erstes und zweites Rohrelement miteinander verbunden. Bei einem Rohrelement handelt es sich dabei um ein Bauteil, welches einen Kanal aufweist, durch den ein strömendes Medium geleitet werden kann. Beispielsweise kann es sich bei einem Rohrelement um ein Rohr handeln. Das erste und zweite Rohrelement und die Rohrverbindung können beispielsweise Bestandteil einer Leitung zum Leiten eines Fluids oder Bestandteil einer Vakuumleitung wie etwa einer Ultrahochvakuumleitung sein.

Die Verbindung ist vorzugsweise für das jeweilige strömende Medium und die jeweiligen Druckverhältnisse dicht, sodass das strömende Medium im Bereich der Rohrverbindung im Wesentlichen nicht entweichen kann bzw. dass im Fall von Unterdruck in den Rohrelementen im Bereich der Rohrverbindung keine Stoffe eindringen können.

Bei einem strömenden Medium kann es sich beispielsweise um ein Fluid handeln. Der Begriff "Fluid" umfasst dabei Gase, Flüssigkeiten sowie Gemische aus Gasen und/oder Flüssigkeiten. Bei dem strömenden Medium kann es sich auch um einen anderen fliessfähigen Stoff, beispielsweise ein Aerosol oder eine Dispersion handeln. Das strömende Medium kann Umgebungsdruck, Überdruck oder Unterdruck aufweisen.

Dadurch, dass im ersten Zustand das Verdrehsicherungselement relativ zu dem zweiten Rohrelement verdrehbar ist, ist es beispielsweise möglich, das erste Rohrelement und das zweite Rohrelement zueinander auszurichten, ohne dass dabei auf eine bestimmte Orientierung des Verdrehsicherungselements geachtet werden muss, was nicht nur den Aufwand beim Zusammenbauen erheblich verringert, sondern zudem eine grössere Freiheit der relativen Orientierung, die die Rohrelemente nach dem Zusammenbauen der Rohrverbindung zueinander einnehmen können, gestattet. Es ist dadurch ferner möglich, die erste Eingriffsstruktur durch Drehen des Verdrehsicherungselements auf unkomplizierte Weise so zu positionieren, dass sie mit der zweiten Eingriffsstruktur beispielsweise durch Verschieben des Verdrehsicherungselements in Eingriff gebracht werden kann.

Erfindungsgemäss ist es beispielsweise ferner möglich, das Verdrehsicherungselement mit dem ersten Rohrelement in Eingriff zu bringen, ohne dafür das zweite Rohrelement und das erste Rohrelement relativ zueinander bewegen zu müssen. Dadurch wird der Aufwand beim Zusammenbauen erheblich verringert, insbesondere wenn das Zusammenbauen unter räumlich beengten Bedingungen oder an schwer zugänglichen Stellen zu erfolgen hat.

Im Zuge des Zusammenbauens der Rohrverbindung liegt vorzugsweise zuerst der erste Zustand und zu einem späteren Zeitpunkt der zweite Zustand vor.

Die erfindungsgemässe Rohrverbindung kann ohne den Einsatz von Schmiermitteln auskommen und daher im komplett entfetteten und gereinigten Zustand montiert werden. Dadurch ist ein Einsatz unter Rein- und Reinstraumbedingungen sowie unter Bedingungen mit hohen Hygieneanforderungen möglich.

Die erfindungsgemässe Rohrverbindung kann ferner ohne den Einsatz von zusätzlichen Dichtungen auskommen. Durch den Verzicht auf zusätzliche Dichtungen und Schmiermittel wird nicht nur der aus ökonomischen und ökologischen Gründen nachteilige Einsatz von Schmiermitteln und/oder Verschleissteilen vermieden. Ausserdem ist dadurch der Temperaturbereich, im dem die Rohrverbindung bei geeigneter Auswahl der Materialen, aus der die Bestandteile der Rohrverbindung bestehen, einsetzbar ist, sehr gross, beispielsweise von -250 °C oder tiefer bis 285 °C oder höher, bevorzugt -273 °C bis 450 °C. Auch der Druckbereich, in dem die Rohrverbindung bei geeigneter Materialauswahl eingesetzt werden kann, ist sehr gross, beispielsweise von Ultrahochvakuum bis Hochdruck.

Vorzugsweise ist die erfindungsgemässe Rohrverbindung so ausgebildet, dass sie keine Totvolumina aufweist. Ferner sind die Innenbohrungen der Rohrelemente und des Klemmrings aufeinander abgestimmt, sodass keine störenden Übergänge vorhanden sind und die Rohrverbindung strömungsgünstig ist.

Vorzugsweise wird der Flansch der erfindungsgemässen Rohrverbindung von einem Klemmring, welcher bevorzugt an dem Ende des zweiten Rohrelements, das dem ersten Rohrelement zugewandt ist, angebracht ist, gebildet. Auf diese Weise ist es beispielsweise möglich, am ersten Rohrelement einen Flansch auszubilden, ohne das erste Rohrelement umzuformen.

Vorzugsweise wird dabei der Klemmring beim Verbinden des zweiten Rohrelements mit dem ersten Rohrelement in dem dem ersten Rohrelement zugewandten Teilbereich nicht oder in einem nicht nennenswerten Ausmass irreversibel verformt. Das heisst insbesondere, dass der Flansch beim Zusammenbauen nicht oder in einem nicht nennenswerten Ausmass irreversibel verformt wird. Dadurch ist es beispielsweise möglich, den Klemmring wiederzuverwenden, nachdem die Rohrverbindung wieder geöffnet worden ist, ohne die Dichtwirkung des Klemmrings nennenswert zu verschlechtern.

Vorzugsweise ist die Dichtfläche des Klemmrings in einem inneren, bevorzugt ringförmigen Bereich plan und läuft in einem äusseren Bereich schräg aus. Dadurch ist es beispielsweise möglich, dass die Dichtwirkung erhalten bleibt, auch wenn es mit steigender Anzahl an Wiederholmontagen, d.h. Wiederverwendungen des Klemmrings, zu plastischen Verformungen des Klemmrings auch im Bereich des Flansches kommen sollte. In diesem Fall würde die Dichtlinie mit steigender Anzahl an Wiederholmontagen auf der Dichtfläche zentripetal nach aussen wandern.

Auf der dem Flansch gegenüberliegenden Seite des Klemmrings kann es beim Zusammenbauen des Klemmrings zu einer irreversiblen Verformung des Klemmrings kommen, durch die der Klemmring mit dem zweiten Rohrelement verbunden ist. Vorzugsweise wird das zweite Rohrelement dabei im Bereich seines Endes ebenfalls irreversibel verformt, insbesondere eingeschnürt, sodass der Klemmring mit dem zweiten Rohrelement formschlüssig verbunden bleibt, wenn die Rohrverbindung wieder geöffnet wird.

Vorzugsweise werden im zweiten Zustand eine Innenfläche des Klemmrings vom Verdrehsicherungselement gegen eine Aussenfläche des zweiten Rohrelements im Bereich seines Endes gepresst, um den Klemmring am zweiten Rohrelement zu fixieren, wenn das erste Rohrelement und das zweite Rohrelement miteinander verbunden sind, und der Klemmring von einer Konusstruktur des Verdrehsicherungselements geklemmt. Dadurch werden beispielsweise der Klemmring am zweiten Rohrelement fixiert sowie der Flansch und damit das zweite Rohrelement gegen ein Verdrehen relativ zum Verdrehsicherungselement gesichert, d.h. das Zusammenwirken des Verdrehsicherungselements mit dem Flansch bzw. dem Klemmring hemmt bzw. verhindert eine entsprechende Drehung.

Alternativ zur Verwendung eines Klemmrings kann der Flansch vorzugsweise auch integral mit dem zweiten Rohrelement gebildet sein. Dadurch werden beispielsweise die Anzahl der Bauteile der erfindungsgemässen Rohrverbindung reduziert und das Zusammenbauen der Rohrverbindung vereinfacht. Bei dem zweiten Rohrelement handelt es sich dabei bevorzugt um einen Anschweissnippel und/oder einen Verbindungsnippel.

Vorzugsweise ist das Verdrehsicherungselement im ersten Zustand entlang wenigstens eines Teils des zweiten Rohrelements verschiebbar. Dadurch wird beispielsweise eine Bewegung, mit der das Verdrehsicherungselement relativ zum ersten Rohrelement positioniert wird, geführt.

Alternativ ist das Verdrehsicherungselement zwar relativ zu dem zweiten Rohrelement verdrehbar, nicht aber entlang des zweiten Rohrelements verschiebbar. Dies kann beispielsweise dadurch realisiert werden, dass das Verdrehsicherungselement von einer an der Aussenfläche des zweiten Rohrelements angebrachten Ringnut oder von Splinten gehalten wird.

Vorzugsweise ist das Verdrehsicherungselement ringförmig ausgebildet und weist eine erste Eingriffsstruktur auf. Bevorzugt weist die erste Eingriffsstruktur in einer axialen Richtung Vorsprünge und/oder Vertiefungen auf, die mit einer an dem ersten Rohrelement vorgesehenen zweiten Eingriffsstruktur, die bevorzugt komplementäre Vertiefungen und/oder Vorsprünge aufweist, zusammenwirken können. Dadurch kann beispielsweise eine sichere, formschlüssige Verbindung zwischen dem Verdrehsicherungselement und dem ersten Rohrelement hergestellt werden.

Es ist dabei möglich, dass die erste Eingriffsstruktur Vorsprünge und die zweite Eingriffsstruktur Vertiefungen aufweist oder dass die erste Eingriffsstruktur Vertiefungen und die zweite Eingriffsstruktur Vorsprünge aufweist oder dass sowohl die erste Eingriffsstruktur als auch die zweite Eingriffsstruktur jeweils sowohl Vorsprünge als auch Vertiefungen aufweisen.

Die erste und zweite Eingriffsstruktur können alternativ auf andere Weise als durch Vorsprünge und Vertiefungen ausgebildet sein, wobei es ebenfalls möglich ist, die erste und zweite Eingriffsstruktur miteinander in Eingriff zu bringen, um das Verdrehen des Verdrehsicherungselements gegenüber dem ersten Rohrelement zu verhindern. Beispielsweise können die erste und zweite Eingriffsstruktur als Polygonstrukturen ausgebildet sein, die ein formschlüssiges Ineinandergreifen erlauben. Die erste und zweite Eingriffsstruktur können beispielsweise auch als geraute oder geriffelte Flächen ausgebildet sein, sodass die erste und zweite Eingriffsstruktur reibschlüssig ineinander eingreifen können.

Vorzugsweise können dabei die erste Eingriffsstruktur und die zweite Eingriffsstruktur durch Verschieben des Verdrehsicherungselements entlang des zweiten Rohrelements in Richtung der zweiten Eingriffsstruktur miteinander in Eingriff gebracht werden. Dadurch wird beispielsweise eine Bewegung, mit der die erste und die zweite Eingriffsstruktur miteinander in Eingriff gebracht werden, geführt.

Vorzugsweise weisen das Verdrehsicherungselement eine erste Widerlagerfläche, gegen die im zweiten Zustand das Anschlusselement drückt, und eine zweite Widerlagerfläche, die im zweiten Zustand gegen den Flansch drückt, auf. Dadurch ist es beispielsweise möglich, das Verdrehsicherungselement in Richtung des ersten Rohrelements mit einer Kraft zu belasten, durch die die erste Eingriffsstruktur und die zweite Eingriffsstruktur miteinander in Eingriff gehalten werden, sowie eine Innenfläche des Klemmrings gegen eine Aussenfläche des zweiten Rohrelements zu pressen, um den Klemmring am zweiten Rohrelement zu fixieren.

Vorzugsweise ist das Anschlusselement relativ zu dem Verdrehsicherungselement bis zum Erreichen einer festen Verbindung zwischen dem ersten Rohrelement und dem zweiten Rohrelement verdrehbar. Dabei ist es bevorzugt, dass ein zum Drehen des Anschlusselements auf das Anschlusselement einwirkendes Drehmoment nicht oder in nicht wesentlichem Ausmass auf das zweite Rohrelement übertragen wird. Dadurch ist es beispielsweise möglich, das Anschlusselement mittels einer Schraubverbindung mit dem ersten Rohrelement zu verbinden, ohne dass das zweite Rohrelement beim Schliessen der Schraubverbindung mitgedreht wird. Dadurch kann beispielsweise die Montagegenauigkeit verbessert werden. Ausserdem kann beispielsweise verhindert werden, dass die Dichtflächen der Rohrverbindung aneinander scheren, was die Dichtwirkung und eine Wiederverwendbarkeit des Klemmrings oder des Verbindungsnippels oder des Anschweissnippels beeinträchtigen und möglicherweise zu einem Kaltverschweissen der Dichtflächen führen würde. Darüber hinaus können beispielsweise eine Belastung des zweiten Rohrelements und eine Beschädigung des zweiten Rohrelements durch Torsion vermieden werden, selbst wenn es sich bei dem zweiten Rohrelement um ein torsionsempfindliches Bauteil wie beispielsweise einen Metallwellschlauch handelt.

Vorzugsweise kann die dichte Verbindung zwischen dem ersten Rohrelement und dem zweiten Rohrelement wieder gelöst werden, um das erste Rohrelement und das zweite Rohrelement voneinander zu trennen, wobei das erste Rohrelement und das zweite Rohrelement nach dem Lösen wieder dicht miteinander verbunden werden können, und wobei das Lösen und Wiederverbinden bevorzugt wiederholbar ist. Mehr bevorzugt ist das derartig wiederholbare Lösen und Wiederverbinden mindestens zwanzigmal wiederholbar. Durch die Wiederholbarkeit ist es beispielsweise möglich, den Verbrauch an Verschleissteilen zu reduzieren bzw. überhaupt zu vermeiden. Ausserdem kann dadurch, dass der Klemmring nicht ausgewechselt werden muss, beispielsweise der Arbeitswandaufwand beim Lösen und Wiederverbinden der Rohrverbindung reduziert werden.

Vorzugsweise weist das zweite Anschlusselement eine zweite Verbindungsstruktur auf, die ausgebildet ist, mit einer am ersten Rohrelement vorgesehenen ersten Verbindungsstruktur zusammenzuwirken. Dadurch können beispielsweise die Verbindungsstruktur und das erste Rohrelement ohne den Einsatz separater Bauteile miteinander verbunden werden. Bevorzugt ist das Anschlusselement relativ zu dem ersten Rohrelement und dem zweiten Rohrelement verschiebbar, solange die erste und die zweite Verbindungsstruktur nicht zusammenwirken. Dadurch wird beispielsweise eine Bewegung, mit der das Anschlusselement relativ zum ersten Rohrelement positioniert wird, geführt.

Vorzugsweise ist das Anschlusselement als Überwurfmutter ausgebildet, wobei die erste und die zweite Verbindungsstruktur ein Gewinde sind. Dadurch ist es beispielsweise möglich, dass das Anschlusselement in seinem Inneren das Verdrehsicherungselement und den Flansch aufnimmt und beim Verbinden der ersten und der zweiten Verbindungsstruktur eine Innenfläche des Klemmrings gegen eine Aussenfläche des zweiten Rohrelements presst.

Alternativ oder zusätzlich zu einer Schraubverbindung können das erste Rohrelement und das Anschlusselement auf andere Weise miteinander verbindbar sein. Beispielsweise können die erste und zweite Verbindungsstruktur als Bajonettverschluss ausgebildet sein. Eine Verbindung kann beispielsweise auch mittels einer Schelle, die an das erste Rohrelement und das Anschlusselement angelegt wird, hergestellt werden.

Vorzugsweise umfasst das erste Rohrelement eine erste plane Dichtfläche, wobei der Flansch eine zweite plane Dichtfläche umfasst, die im verbundenen Zustand des ersten Rohrelements und des zweiten Rohrelements dicht an der ersten Dichtfläche anliegt. Dadurch lässt sich beispielsweise zwischen dem ersten und dem zweiten Rohrelement eine bevorzugt lösbare dichte Verbindung herstellen ohne dass zusätzliche Dichtungen und Schmiermittel erforderlich sind. Bevorzugt sind die erste Dichtfläche und die zweite Dichtfläche dabei metallisch und/oder die erste und/oder die zweite Dichtfläche sind beschichtet. Dadurch kann beispielsweise eine besonders gute Dichtwirkung erreicht werden. Ferner kann dadurch eine besonders gute Wiederverwendbarkeit des Klemmrings gegeben sein. Besonders bevorzugt ist dabei eine Beschichtung auf Basis von PTFE.

Es ist im Rahmen der Erfindung möglich, dass die Rohrverbindung das zweite Rohrelement umfasst.

Das erfindungsgemässe Verfahren zum Verbinden eines ersten Rohrelements und eines zweiten Rohrelements einer Rohrverbindung gemäss einem der Ansprüche umfasst die Schritte:
- Anbringen des Anschlusselements und des Verdrehsicherungselements auf dem zweiten Rohrelement,
- Positionieren des ersten und des zweiten Rohrelements zueinander,
- In-Eingriff-Bringen des Verdrehsicherungselements mit dem ersten Rohrelement zum Verhindern einer Rotation des ersten Rohrelements relativ zu dem zweiten Rohrelement,
- Verbinden des Anschlusselements mit dem ersten Rohrelement, derart, dass das zweite Rohrelement über den Flansch mit dem ersten Rohrelement verbunden ist, dass der Flansch (50) gegen ein Verdrehen relativ zum Verdrehsicherungselement (30) gesichert ist, dass das Verdrehsicherungselement (30) gegen ein Verdrehen relativ zum ersten Rohrelement (10) gesichert ist und dass das erste Rohrelement und das zweite Rohrelement gegen ein Verdrehen relativ zueinander gesichert sind.

Das erfindungsgemässe Verfahren umfasst optional ferner den Schritt des Anbringens eines Klemmrings am zweiten Rohrelement zum Bilden des Flanschs.

Vorzugsweise wird das zweite Rohrelement zum Positionieren in axialer und/oder in radialer Richtung zur Rohrachse an das erste Rohrelement hinbewegt. Der Begriff "radiale Richtung" bezieht sich dabei auf die Richtung des Radius des häufig kreisförmigen Querschnitts der Rohrelemente, wird aber auf analoge Weise im Fall nicht kreisförmiger Querschnitte verwendet. Durch das Positionieren in radialer Richtung kann der Aufwand beim Zusammenbauen der Rohrverbindung in erheblichem Masse verringert werden. Dies kann insbesondere dann vorteilhaft sein, wenn das Zusammenbauen unter räumlich beengten Bedingungen erfolgt und/oder wenn das erste Rohrelement räumlich fixiert ist, da es dann nicht verbogen werden muss, um das Positionieren zu ermöglichen. Durch das Verbiegen kann das erste Rohrelement beschädigt oder sogar zerstört werden.

Weitere Merkmale und Zweckmässigkeiten der Erfindung ergeben sich aus der Beschreibung von Ausführungsformen der erfindungsgemässen Vorrichtung unter Bezugnahme auf die beigefügten Zeichnungen. Die einzelnen Merkmale der Ausführungsformen können dabei, soweit sinnvoll, beliebig miteinander kombiniert werden.
- Fig. 1: zeigt eine Explosionsdarstellung einer Rohrverbindung gemäss einer ersten Ausführungsform der vorliegenden Erfindung.
- Fig. 2: zeigt eine schematische Schnittdarstellung des Verdrehsicherungselements gemäss der ersten Ausführungsform.
- Fig. 3: zeigt eine schematische Schnittdarstellung des Klemmrings gemäss der ersten Ausführungsform.
- Fig. 4: zeigt eine perspektivische Ansicht der Rohrverbindung gemäss der ersten Ausführungsform in einem ersten Montagezustand.
- Fig. 5: zeigt eine perspektivische Ansicht der Rohrverbindung gemäss der ersten Ausführungsform in einem weiteren Montagezustand.
- Fig. 6: zeigt eine perspektivische Ansicht der Rohrverbindung gemäss der ersten Ausführungsform in noch einem weiteren Montagezustand.
- Fig. 7: zeigt eine perspektivische Ansicht der Rohrverbindung gemäss der ersten Ausführungsform in einem zusammengebauten Zustand.
- Fig. 8: zeigt eine schematische Schnittdarstellung der Rohrverbindung gemäss der ersten Ausführungsform in einem handfest montierten Zustand.
- Fig. 9: zeigt eine Explosionsdarstellung einer Rohrverbindung gemäss einer weiteren Ausführungsform der vorliegenden Erfindung.
- Fig. 10: zeigt eine schematische Schnittdarstellung der Rohrverbindung gemäss der Ausführungsform von Fig. 9 in einem handfest montierten Zustand.
- Fig. 11: zeigt eine schematische Schnittdarstellung einer Rohrverbindung gemäss noch einer weiteren Ausführungsform der Erfindung in einen zusammengebauten Zustand.
- Fig. 12: zeigt eine schematische Schnittdarstellung einer Rohrverbindung gemäss noch einer weiteren Ausführungsform der Erfindung in einen zusammengebauten Zustand.
- Fig. 13: zeigt eine schematische Schnittdarstellung einer Rohrverbindung gemäss noch einer weiteren Ausführungsform der Erfindung in einem handfest montierten Zustand.
- Fig. 14: zeigt eine Draufsicht der Rohrverbindung der Ausführungsform von Fig. 13 in einem handfest montierten oder zusammengebauten Zustand.

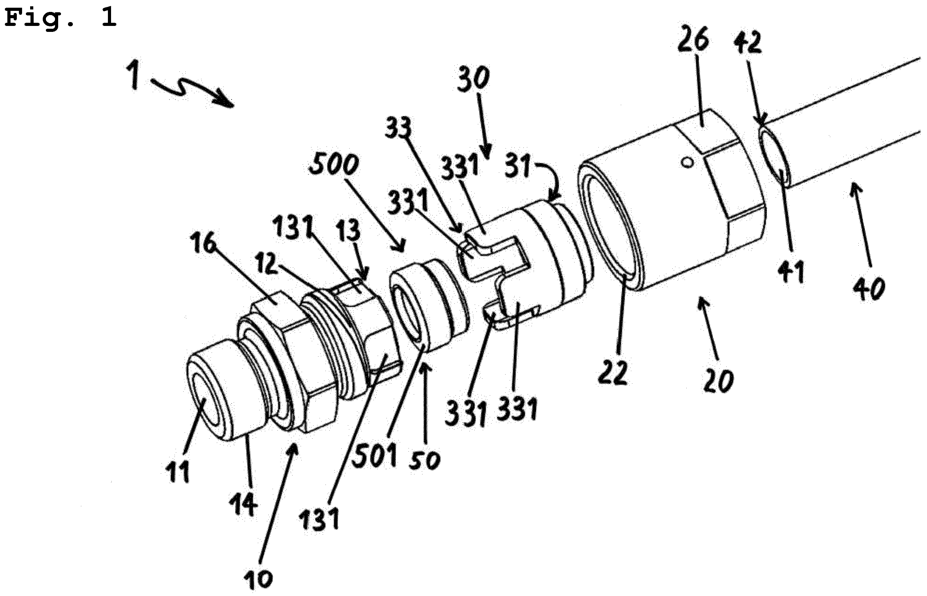

In Fig. 1 ist eine Explosionsdarstellung der Rohrverbindung 1 gemäss einer ersten Ausführungsform der vorliegenden Erfindung gezeigt.

Die Rohrverbindung 1 umfasst ein erstes Rohrelement 10, welches einen Kanal 11 zur Durchleitung eines strömenden Mediums aufweist. Das erste Rohrelement 10 weist ferner eine erste Verbindungsstruktur 12 auf.

Die Rohrverbindung 1 umfasst ferner ein Anschlusselement 20, welches eine zweite Verbindungsstruktur 22 aufweist. Bei dem Anschlusselement 20 handelt es sich vorzugsweise um eine Überwurfmutter und bei der zweiten Verbindungsstruktur 22 um ein Innengewinde, welches mit der als Aussengewinde ausgebildeten ersten Verbindungsstruktur 12 zusammenwirken kann, um zwischen dem Anschlusselement 20 und dem ersten Rohrelement 10 eine Schraubverbindung herzustellen.

Das erste Rohrelement 10 und das Anschlusselement 20 weisen bevorzugt zumindest in einem Teilbereich ihrer Aussenflächen Mehrkantstrukturen 16, 26 auf, die das Herstellen der Schraubverbindung von Hand erleichtern und/oder das Ansetzen von dafür geeigneten Werkzeugen wie etwa Schraubenschlüssel ermöglichen. Alternativ oder zusätzlich können zu diesem Zweck auch geraute oder geriffelte Strukturen vorgesehen sein.

In Fig. 1 ist ferner ein zweites Rohrelement 40 gezeigt. Das zweite Rohrelement 40 weist einen zweiten Kanal 41 zum

Durchleiten des strömenden Mediums auf. Es ist beispielhaft als Rohr dargestellt. Das zweite Rohrelement 40 wird dabei bevorzugt nicht als Bestandteil der Rohrverbindung 1 betrachtet, sondern als ein Bauteil, das mit der Rohrverbindung 1 zusammenwirken kann, um eine dichte Verbindung zwischen dem ersten Rohrelement 10 und dem zweiten Rohrelement 40 zu erzeugen.

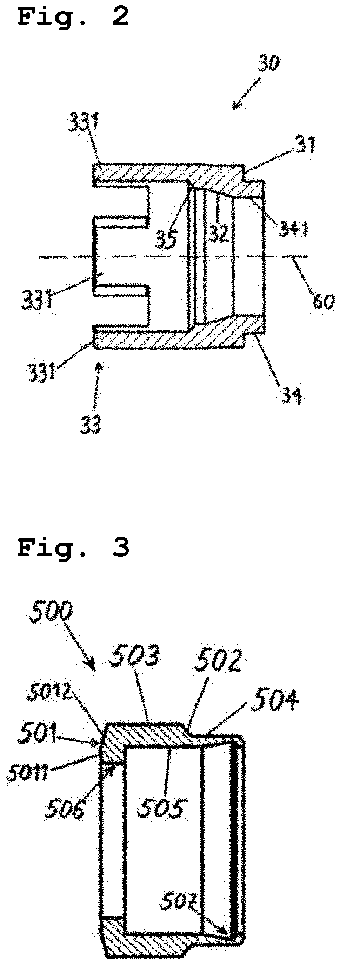

Die Rohrverbindung 1 umfasst ferner ein Verdrehsicherungselement 30. In Fig. 2 ist eine schematische Schnittdarstellung des Verdrehsicherungselements 30 gezeigt. Das Verdrehsicherungselement 30 weist eine erste Eingriffsstruktur 33, welche ausgebildet ist, mit einer zweiten Eingriffsstruktur 13, welche am ersten Rohrelement 10 vorgesehen ist, zusammenzuwirken, um ein Verdrehen des Verdrehsicherungselements 30 relativ zum ersten Rohrelement zu verhindern. Das Verdrehsicherungselement 30 ist bevorzugt ringförmig, wobei die Ringachse im zusammengebauten Zustand der Rohrverbindung 1 der gemeinsamen Achse 60 des ersten und des zweiten Kanals 11, 41 entspricht.

Die erste Eingriffsstruktur 33 umfasst eine Mehrzahl von Vorsprüngen 331, welche sich in axialer Richtung des Verdrehsicherungselements 30 erstrecken. Beispielsweise können vier Vorsprünge 331 vorgesehen sein. Die zweite Eingriffsstruktur 13 umfasst eine korrespondierende Anzahl an Vertiefungen 131. Wenn die erste Eingriffsstruktur 33 mit der zweiten Eingriffsstruktur 13 in Eingriff gebracht wird, was bevorzugt durch Verschieben des Verdrehsicherungselements 30 entlang des zweiten Rohrelements 40 bewirkt wird, greift jeweils ein Vorsprung 331 in eine Vertiefung 131 ein. Das Verdrehen des Verdrehsicherungselements 30 gegenüber dem ersten Rohrelement 10 ist dann verhindert. Eine Relativbewegung zwischen dem ersten Rohrelement 10 und dem zweiten Rohrelement 20 ist dabei nicht erforderlich, um die erste Eingriffsstruktur 33 mit der zweiten Eingriffsstruktur 13 in Eingriff zu bringen. Die Anzahl der Vorsprünge 331 und Vertiefungen 131 ist im Grunde beliebig. Die Darstellung von vier Vorsprüngen 331 und vier Vertiefungen 131 ist lediglich beispielhaft. Es ist ausreichend, wenn ein Vorsprung 331 und eine Vertiefung 131 vorgesehen sind.

Das Verdrehsicherungselement 30 weist ferner im Bereich seiner Aussenfläche an der der ersten Eingriffsstruktur 33 gegenüberliegenden Seite mindestens eine erste Widerlagerfläche 31 auf. Gemäss der ersten Ausführungsform ist die erste Widerlagerfläche 31 als Stirnfläche eines Absatzes der Aussenfläche des Verdrehsicherungselements 30 ausgebildet. Das Verdrehsicherungselement 30 weist dann an der der ersten Eingriffsstruktur 33 gegenüberliegenden Seite einen Bereich 34 mit kleinerem Aussendurchmesser auf. Es ist dabei bevorzugt, dass der Aussendurchmesser des Bereichs 34 so gewählt ist, dass der Bereich 34 im zusammengebauten Zustand der Rohrverbindung 1 in einer Durchgangsbohrung 23 auf der dem ersten Rohrelement 10 abgewandten Seite des Anschlusselements 20 aufgenommen wird.

Dadurch, dass das Verdrehsicherungselement einen Bereich 34 mit kleinerem Aussendurchmesser aufweist, ist es möglich für verschiedene zweite Rohrelemente 40 mit unterschiedlichen Aussendurchmessern dasselbe Anschlusselement 20 zu verwenden, wobei jeweils ein Verdrehsicherungselement 30 zu wählen ist, das eine Durchgangsbohrung 341 mit einem an den Aussendurchmesser des zweiten Rohrelements 40 angepassten Durchmesser aufweist. Der Aussendurchmesser des Bereichs 34 ist jeweils so gewählt, dass der Bereich 34 im zusammengebauten Zustand der Rohrverbindung 1 in der Durchgangsbohrung 23 des Anschlusselements 20 aufgenommen wird.

Das Verdrehsicherungselement 30 weist ferner im Bereich seiner Innenfläche mindestens eine zweite Widerlagerfläche 32 auf. Bevorzugt ist die zweite Widerlagerfläche 32 als Konusfläche ausgebildet, wobei sich die Innenfläche des Verdrehsicherungselements 30 in einem Teilbereich in Richtung der der ersten Eingriffsstruktur 33 gegenüberliegenden Seite verjüngt.

Das Verdrehsicherungselement 30 weist bevorzugt im Bereich seiner Innenfläche ferner eine Verjüngung 35 auf, welche zwischen der zweiten Widerlagerfläche 32 und der ersten Eingriffsstruktur 33 angeordnet ist.

Die Rohrverbindung 1 gemäss der ersten Ausführungsform weist ferner einen Klemmring 500 auf. In Fig. 3 ist eine schematische Schnittdarstellung des Klemmrings 500 gezeigt. Der Klemmring 500 weist einen grösseren Aussendurchmesser als das zweite Rohrelement 40 auf und ist ausgebildet, an einem Ende 42 des zweiten Rohrelements 40 beispielsweise angebracht zu werden. Der Klemmring 500 weist bevorzugt einen Vorsprung 506 auf, gegen den das Ende 42 stösst, wenn der Klemmring 500 am zweiten Rohrelement 40 beispielsweise durch Aufsetzen oder Aufstecken angebracht wird.

Durch das Anbringen des Klemmrings 500 wird am Ende 42 des zweiten Rohrelements 40 ein Flansch 50 gebildet. Der Flansch 50 ist demnach eine ringförmig verbreiterte Aussenfläche im Bereich des Endes 42 des zweiten Rohrelements 40. Über den Flansch 50 wird das zweite Rohrelement 40 mit dem ersten Rohrelement 10 dicht verbunden.

Der Klemmring 500 weist an seinem im geschlossenen Zustand der Rohrverbindung dem ersten Rohrelement 10 zugewandten Ende eine zweite Dichtfläche 501 auf. Die zweite Dichtfläche 501 ist ausgebildet, mit einer ersten Dichtfläche 101 des ersten Rohrelements 10 zusammenzuwirken, um im geschlossenen Zustand der Rohrverbindung 1 eine dichte Verbindung zwischen dem ersten und dem zweiten Rohrelement 10, 40 herzustellen.

Bevorzugt ist die zweite Dichtfläche 501 zumindest in einem inneren, insbesondre ringförmigen Bereich 5011 plan und so ausgebildet, dass sie im zusammengebauten Zustand der Rohrverbindung 1 senkrecht oder im Wesentlichen senkrecht zur gemeinsamen Achse 60 des ersten und des zweiten Kanals 11, 41 steht. Weiter bevorzugt läuft die Dichtfläche 501 schräg aus, d.h. sie ist in einem äusseren Bereich 5012 schräg zur gemeinsamen Achse 60, insbesondere in Form der Mantelfläche eines flachen Kegelstumpfs ausgebildet.

Der Klemmring 500 hat vorzugsweise nicht über seine gesamte Länge denselben Aussendurchmesser, sondern weist eine bevorzugt schräge Verjüngung 502 auf, sodass die Aussenfläche des Klemmrings 500 einen ersten Bereich 503 mit grösserem Aussendurchmesser und einen zweiten Bereich 504 mit kleinerem Aussendurchmesser aufweist. Der erste Bereich 503 ist dabei im zusammengebauten Zustand der Rohrverbindung 1 dem ersten Rohrelement 10 zugewandt. Die Verjüngung 502 des Klemmrings dient beim Zusammenbauen der Rohrverbindung 1 als Endanschlag, indem die Verjüngung 502 des Klemmrings beim Zusammenbauen der Rohrverbindung mit der zu ihr komplementären Verjüngung 35 des Verdrehsicherungselements zusammenstösst, wenn die Rohrverbindung fertig zusammengebaut ist.

Der Durchmesser der Innenfläche 505 des Klemmrings ist so ausgelegt, dass der Klemmring auf dem Ende 42 angebracht werden kann. Im Bereich des im geschlossenen Zustand der Rohrverbindung dem ersten Rohrelement 10 abgewandten Ende des Klemmrings kann der Durchmesser der Innenfläche 505 einen Einstich 507 aufweisen, wodurch eine Halterille gebildet wird, die das Eingreifen des Klemmrings 500 am zweiten Rohrelement 40 verbessert.

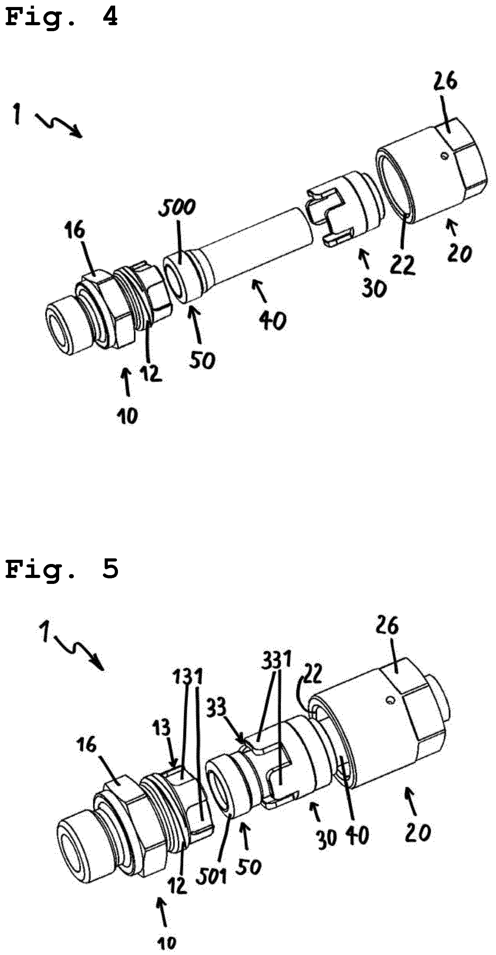

In Fig. 4 ist eine perspektivische Ansicht der Rohrverbindung 1 gemäss der ersten Ausführungsform dargestellt, wobei der Klemmring 500 am Ende 42 des zweiten Rohrelements 40 angebracht ist.

Der Klemmring 500 ist dabei vorzugsweise durch eine geeignete Wahl der Durchmesser der Innenfläche 505 sowie des ersten und zweiten Bereichs 503, 504 der Aussenfläche für ein erstes Rohrelement 10 und ein zweites Rohrelement 40, die dieselbe Dimension aufweisen, ausgelegt.

Das Verdrehsicherungselement 30 ist auf dem zweiten Rohrelement 40 anbringbar. In einem ersten Zustand der Rohrverbindung 1, in dem das Verdrehsicherungselement 30 ausser Eingriff mit dem ersten Rohrelement 10 ist, ist das Verdrehsicherungselement 30 relativ zu dem zweiten Rohrelement 40 verdrehbar.

In Fig. 5 ist eine perspektivische Ansicht der Rohrverbindung 1 gemäss der ersten Ausführungsform dargestellt, wobei sich die Rohrverbindung im ersten Zustand befindet. Zusätzlich zum Verdrehsicherungselement 30 ist auch das Anschlusselement 20 auf dem zweiten Rohrelement 40 angebracht, aber noch nicht mit dem ersten Rohrelement 10 verbunden.

Vorzugsweise ist das Verdrehsicherungselement 30 entlang eines Teilbereichs des zweiten Rohrelements 40 oder entlang des gesamten zweiten Rohrelements 40 verschiebbar. Durch Verschieben des Verdrehsicherungselements 30 entlang des zweiten Rohrelements 40 in Richtung des ersten Rohrelements 10 können die erste und zweite Eingriffsstruktur 33, 13 miteinander in Eingriff gebracht werden. Bevorzugt werden das erste Rohrelement 10 und das zweite Rohrelement 40 zuvor relativ zueinander positioniert, sodass die Dichtflächen 101, 501 einander gegenüberliegen oder einander berühren.

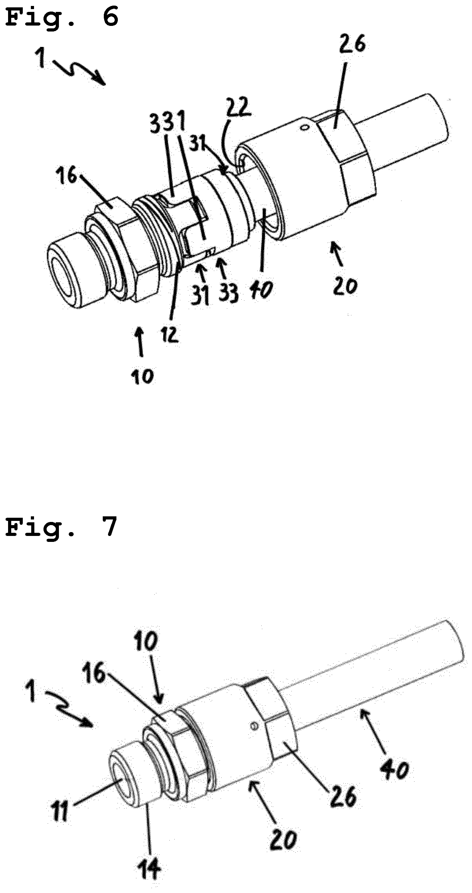

In Fig. 6 ist eine perspektivische Ansicht der Rohrverbindung 1 gemäss der ersten Ausführungsform dargestellt, wobei das Verdrehsicherungselement 30 durch Verschieben entlang des zweiten Rohrelements 40 in Richtung des ersten Rohrelements in Eingriff gebracht worden ist. Das Anschlusselement 20 ist dabei noch nicht mit dem ersten Rohrelement 10 verbunden.

Wenn das Verdrehsicherungselement 30 über die erste und zweite Eingriffsstruktur 33, 13 in Eingriff mit dem ersten Rohrelement 10 ist, ist das Verdrehsicherungselement 30 gegen Verdrehen relativ zum ersten Rohrelement 10 gesichert, d.h. das Zusammenwirken der Eingriffsstrukturen 33, 13 hemmt eine entsprechende Drehung.

Optional sind das Verdrehsicherungselement 30 und das zweite Rohrelement 40 dann bereits gegen Verdrehen relativ zueinander gesichert, sodass insgesamt das erste Rohrelement 10 und das zweite Rohrelement 40 gegen Verdrehen relativ zueinander gesichert sind. Bevorzugt können dann das erste Rohrelement 10 und das zweite Rohrelement 40 jedoch auch dann relativ zueinander verdreht werden, was eine grössere Freiheit beim Zusammenbauen der Rohrverbindung 1 gestattet.

In Fig. 7 ist eine perspektivische Ansicht der Rohrverbindung 1 gemäss der ersten Ausführungsform in einem zweiten Zustand, in dem die Rohrverbindung 1 zusammengebaut ist sowie das erste Rohrelement 10 und das zweite Rohrelement 40 miteinander verbunden sind, dargestellt. Das Anschlusselement 20 ist mit dem ersten Rohrelement 10 über die Verbindungsstrukturen 12, 22 (in Fig. 7 nicht gezeigt) verbunden. Das erste Rohrelement 10 und das zweite Rohrelement 40 sind gegen Verdrehen relativ zueinander gesichert.

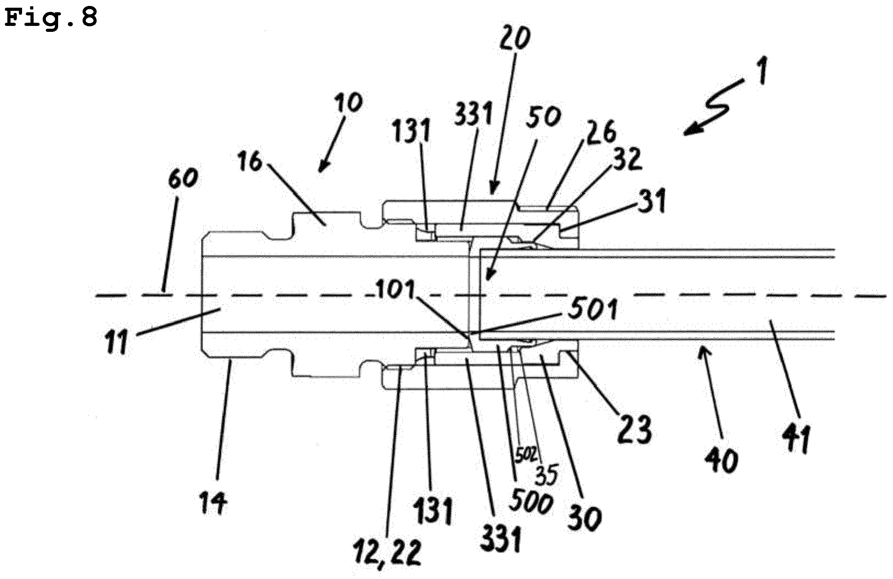

In Fig. 8 ist eine schematische Schnittdarstellung der Rohrverbindung 1 gemäss der ersten Ausführungsform in einem handfest montierten Zustand gezeigt. In diesem handfest montierten Zustand sind das erste Rohrelement 10 und das Anschlusselement 20 miteinander verbunden, beispielsweise indem das Anschlusselement 20 von Hand bevorzugt ohne Zuhilfenahme eines Werkzeugs auf das erste Rohrelement 10 aufgeschraubt worden ist, bis der Anschlag am ersten Rohrelement 10 in Form eines deutlichen Widerstands gegen das weitere Aufschrauben spürbar ist. Um die Rohrverbindung 10 fertig zusammenzubauen, damit sie in einem zusammengebauten Zustand ist, in dem das erste und das zweite Rohrelement 10, 40 dicht miteinander verbunden und gegen ein Verdrehen relativ zueinander gesichert sind, wird die Verbindung zwischen dem Anschlusselement 20 und dem ersten Rohrelement 10 fest geschlossen. Dies erfolgt bevorzugt, indem die erste und zweite Verbindungsstruktur 12, 22 angezogen werden, insbesondere bevorzugt indem das Anschlusselement durch 1 bis 3, beispielsweise 1¾ Umdrehungen weiter auf das erste Rohrelement 10 geschraubt wird. Die Verjüngungen 502 und 35, welche einander in dem in Fig. 8 dargestellten handfest montierten Zustand nicht berühren, bilden einen Endanschlag und berühren einander demnach im zusammengebauten Zustand.

Es ist erkennbar, dass das Anschlusselement 20 in seinem Inneren das Verdrehsicherungselement 30 und das Verdrehsicherungselement 30 in seinem Inneren den Flansch 50 aufnimmt.

Das Anschlusselement 20 drückt im zusammengebauten Zustand gegen die erste Widerlagerfläche 31, um das Verdrehsicherungselement 30 in Richtung des ersten Rohrelements 10 mit einer Kraft zu belasten, durch die die erste Eingriffsstruktur 33 und die zweite Eingriffsstruktur 13 miteinander in Eingriff gehalten werden.

Ferner ist dann das zweite Rohrelement 40 mit dem ersten Rohrelement 10 über den Flansch 50 dicht verbunden. Dazu wird von dem Verdrehsicherungselement 30 auf das zweite Rohrelement 40 und/oder den Flansch 50 eine in Richtung des ersten Rohrelements 10 gerichtete Kraft ausgeübt. Diese Kraft wird erzeugt, indem das Verdrehsicherungselement 30 mit mindestens einer zweiten Widerlagerfläche 32 gegen den Flansch 50 drückt. Durch eine geeignete Ausgestaltung der zweiten Widerlagerfläche 32 und des Klemmrings 500 ist es möglich, eine Innenfläche des Klemmrings 500 gegen eine Aussenfläche des zweiten Rohrelements 40 zu pressen, um den Klemmring 500 am zweiten Rohrelement 40 zu fixieren. Um den Klemmring 500 auf diese Weise zu klemmen, ist die zweite Widerlagerfläche 32 vorzugsweise als Konusfläche ausgebildet, wodurch beim Verbinden des Anschlusselements 20 mit dem ersten Rohrelement 10 eine auf den Klemmring 500 wirkende Kraft, durch die der Klemmring 500 an das zweite Rohrelement 40 geklemmt wird, aufgebaut wird. Auf die beschriebene Weise wird nicht nur der Klemmring 500 am zweiten Rohrelement 40 fixiert, sondern es werden ausserdem der Flansch 50 und damit das zweite Rohrelement 40 gegen ein Verdrehen relativ zum Verdrehsicherungselement 30 gesichert, d.h. das Zusammenwirken des Verdrehsicherungselements 30 mit dem Flansch 50 bzw. dem Klemmring 500 hemmt bzw. verhindert eine entsprechende Drehung.

Daraus, dass dann einerseits der Flansch 50 und damit das zweite Rohrelement 40 gegen ein Verdrehen relativ zum Verdrehsicherungselement 30 gesichert sind und andererseits das Verdrehsicherungselement 30 gegen ein Verdrehen relativ zum ersten Rohrelement 10 gesichert ist, folgt, dass das erste Rohrelement 10 und das zweite Rohrelement 40 gegen ein Verdrehen relativ zueinander gesichert sind. Unter "Verdrehen relativ zueinander" ist dabei eine relative Rotationsbewegung des ersten Rohrelements 10 und des zweiten Rohrelements 40 zu verstehen, bei der die erste Dichtfläche 101 und zweite Dichtfläche 501 miteinander in Kontakt bleiben. In der in Fig. 8 dargestellten Situationen entspricht dies einer relativen Rotationsbewegung um die gemeinsamen Achse 60 des ersten und des zweiten Kanals 11, 41.

Es ist möglich, dass das erste und zweite Rohrelement 10, 40 bereits gegen Verdrehen relativ zueinander gesichert sind, bevor die erste Verbindungsstruktur 12 und die zweite Verbindungsstruktur 22 vollständig miteinander verbunden sind. Der in Anspruch 1 definierte zweite Zustand ist dann nicht nur gegeben, wenn die erste Verbindungsstruktur 12 und die zweite Verbindungsstruktur 22 vollständig miteinander verbunden sind, sondern bereits zuvor, beispielsweise wenn die Rohrverbindung 10 handfest montiert aber nicht fertig zusammengebaut ist.

Es ist allerdings bevorzugt, dass der zweite Zustand erst dann gegeben ist und das erste und zweite Rohrelement 10, 40 erst dann gegen Verdrehen relativ zueinander gesichert sind, wenn die erste Verbindungsstruktur 12 und die zweite Verbindungsstruktur 22 vollständig oder beinahe vollständig miteinander verbunden sind.

Beim Verbinden der ersten Verbindungsstruktur 12 mit der zweiten Verbindungsstruktur 22 wird bevorzugt kein oder im Wesentlichen kein Drehmoment vom Anschlusselement 20 auf den Flansch 50 bzw. das zweite Rohrelement 40 übertragen. Dies wird beispielsweise dadurch erreicht, dass das Anschlusselement 20 auf dem Verdrehsicherungselement 30 gleitet, während es auf das erste Rohrelement 10 geschraubt wird und insbesondere, während die Verbindung angezogen wird. Das Verdrehsicherungselement 30 ist zu diesem Zeitpunkt gegen Verdrehen relativ zum ersten Rohrelement 10 gesichert.

Insbesondere dadurch, dass das Anschlusselements 20 ohne wesentliche Übertragung eines Drehmoments auf den Flansch 50 bzw. das zweite Rohrelement 40 gedreht werden kann, ist es möglich, ohne zusätzliche Dichtung und ohne Auftragen eines Schmiermittels eine dichte Verbindung zwischen dem ersten Rohrelement 10 und dem zweiten Rohrelement 40 herzustellen, ohne dass es dabei zu einem Kaltverschweissen der Dichtflächen 101, 501 und/oder der Verbindungsstrukturen 12, 22 kommt.

Durch eine geeignete Materialauswahl, insbesondere eine geeignete Auswahl der Materialien, aus denen die Dichtflächen 101, 501 bestehen, kann die Wiederverwendbarkeit des Klemmrings 500 und die Verhinderung eines Kaltverschweissens der Dichtflächen 101, 501 weiter verbessert werden.

Durch eine geeignete Materialauswahl der ersten Verbindungsstruktur 12, des Anschlusselements 20 und des Verdrehsicherungselements 30 können auch ein Kaltverschweissen der Verbindungsstruktur 12, 22 sowie ein Kaltverschweissen des Anschlusselements 20 mit dem Verdrehsicherungselement 30 reduziert oder gänzlich vermindert werden. Als vorteilhaft hat es sich dabei erwiesen, das erste Rohrelement 10 zur Gänze und damit auch die erste Verbindungsstruktur 12, das Anschlusselement 20 und das Verdrehsicherungselement 30 jeweils aus einem geeigneten Edelstahl herzustellen. Insbesondere haben sich die Stähle mit den Numemrn 1.4435, 1.4404 und 1.4571 nach EN 10027-2 als geeignet für das erste Rohrelement 10 sowie den Klemmring 500 bzw. Anschweissnippel erwiesen, sowie das als Nitronic 60 bezeichnete Material für das Anschlusselement 20 das Verdrehsicherungselement 30 erwiesen. Ferner können das erste Rohrelement 10 und/oder das Anschlusselement 20 und/oder das Verdrehsicherungselement 30 lösungsgeglüht und/oder gehärtet sein. Der Klemmring 500 bzw. der Anschweissnippel kann ebenfalls lösungsgeglüht und/oder gehärtet sein.

Beim ersten Rohrelement kann es sich um ein Rohr handeln. Die Situation ist in den beigefügten Zeichnungen dargestellt, wobei aus Gründen der Übersichtlichkeit jeweils nur ein kurzer Rohrabschnitt 14 eingezeichnet ist.

Beim ersten Rohrelement 10 handelt es sich gemäss einer weiteren Ausführungsform um den Anschlussstutzen einer Armatur. Bei dieser Armatur kann es sich beispielsweise um ein Ventil zum Regeln der Durchflussmenge eines durch eine Rohrleitung strömenden Mediums handeln.

Beim ersten Rohrelement 10 handelt es sich gemäss einer weiteren Ausführungsform um den Anschlussstutzen eines Messgeräts, beispielsweise eines Manometers.

Beim ersten Rohrelement 10 handelt es sich gemäss einer weiteren Ausführungsform um eine Schlauchtülle, auf die ein Schlauch aufgesteckt werden kann, um diesen mittels der Rohrverbindung 1 mit dem zweiten Rohrelement 40 zu verbinden.

Beim ersten Rohrelement 10 handelt es sich gemäss einer weiteren Ausführungsform um einen Verbindungsnippel zum Verbinden mit einem zweiten Rohrelement 40 und einem weiteren Rohrelement. Der Verbindungsnippel ist so ausgebildet, dass er an einem Ende auf die erfindungsgemässe Weise mit dem zweiten Rohrelement 40 und am anderen Ende mit dem weiteren Rohrelement verbunden werden kann. Die Verbindung mit dem weiteren Rohrelement erfolgt dabei bevorzugt ebenfalls auf erfindungsgemässe Weise.

Der Verbindungsnippel kann gerade oder gekrümmt sein. Ferner kann der Verbindungsnippel für die Verbindung mit einem zweiten Rohrelement 40 und einem weiteren Rohrelement, die unterschiedliche Dimensionen aufweisen, ausgelegt sein. Unter unterschiedlichen Dimensionen sind voneinander unterschiedliche Innendurchmesser und/oder voneinander unterschiedliche Aussendurchmesser der Rohrelemente zu verstehen.

Ferner ist es möglich, dass der Verbindungsnippel Befestigungsstrukturen aufweist, durch die er in der Bohrung eines plattenförmigen Elements befestigt werden kann, sodass er auf beiden Seiten des plattenförmigen Elements mit jeweils einem Rohrelement verbunden werden kann. Man spricht in diesem Fall von einer Schottverbindungen. Bei den Befestigungsstrukturen kann es sich beispielsweise um eine Schraubenmutter und eine Kontermutter handeln, die auf ein im mittleren Bereich der Aussenfläche des Verbindungsnippels angebrachtes Aussengewinde aufgeschraubt werden können.

Beim ersten Rohrelement 10 handelt es sich gemäss einer weiteren Ausführungsform um ein T-Stück, ein Kreuzstück oder ein Verbindungsstück mit mehr als vier Anschlussstutzen zum Verbinden des zweiten Rohrelements 40 mit zwei weiteren, drei weiteren bzw. mehr als drei weiteren Rohrelementen. In ihrer Funktion entsprechen T-Stücke, Kreuzstücke und Verbindungsstücke mit mehr als vier Anschlussstutzen dem oben beschriebenen Verbindungsnippel, mit dem Unterschied, dass sie statt zwei Anschlussstutzen drei, vier bzw. mehr als vier Anschlussstutzen aufweisen.

Beim ersten Rohrelement 10 handelt es sich gemäss einer weiteren Ausführungsform um ein eine Verschlusskappe, d.h. um ein Rohrelement, welches an einem Ende dicht verschlossen ist und an dem anderen Ende mit einem zweiten Rohrelement 40 dicht verbunden werden kann, um das zweite Rohrelement 40 zu verschliessen.

Beim zweiten Rohrelement 40 kann es sich wie beim ersten Rohrelemente 10 beispielsweise um ein Rohr, den Anschlussstutzen einer Armatur, den Anschlussstutzen eines Messgeräts, eine Schlauchtülle, einen Verbindungnippel, ein T-Stück, ein Kreuzstück, ein Verbindungsstück mit mehr als vier Anschlussstutzen oder eine Verschlusskappe handeln.

Die verschiedenen obengenannten Möglichkeiten für das erste Rohrelement 10 und das zweite Rohrelement 40 können beliebig miteinander kombiniert werden. Beispielsweise können die Rohrverbindungen 1 ein Rohr mit einem weiteren Rohr, ein Rohr mit einer Armatur, eine Armatur mit einer Messapparatur oder ein Rohr mit einem Nippel verbunden werden.

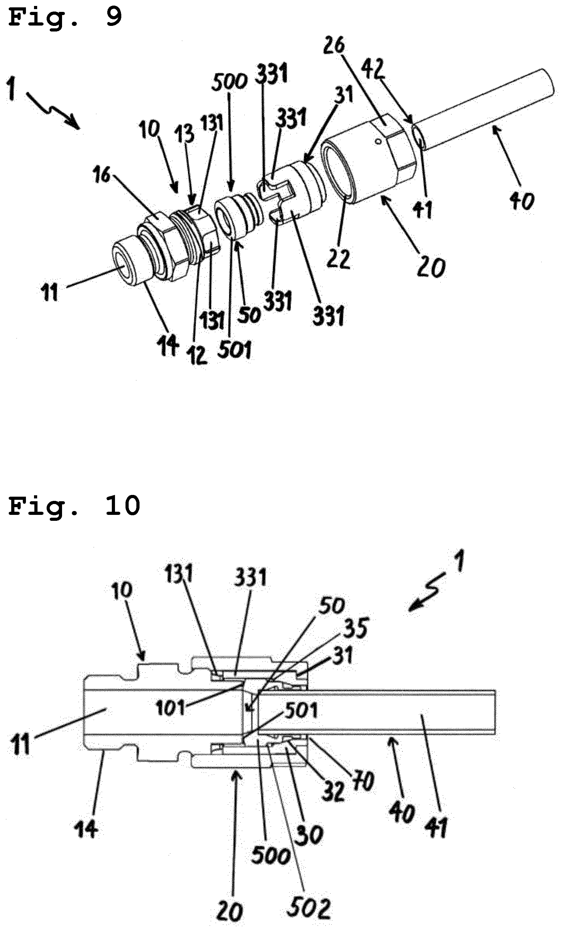

In Fig. 9 ist eine Explosionsdarstellung einer weiteren Ausführungsform der erfindungsgemässen Rohrverbindung 1 gezeigt. In dieser Ausführungsform ist der Klemmring 500 für ein erstes Rohrelement 10 und ein zweites Rohrelement 40, die unterschiedliche Dimensionen aufweisen, ausgebildet. In Fig. 10 ist eine schematische Schnittdarstellung der Rohrverbindung 1 dieser Ausführungsform in einem handfest montierten Zustand gezeigt. In den Figuren 9 und 10 ist eine Situation dargestellt, in der das zweite Rohrelement 40 einen geringeren Innendurchmesser und einen geringeren Aussendurchmesser aufweist als das erste Rohrelement 10. Durch die Rohrverbindung 1 erfolgt demnach eine Reduktion von der Dimension des ersten Rohrelements 10 auf die Dimension des zweiten Rohrelements 40 ohne dass dafür ein gesonderter Adapter erforderlich wäre. Es muss lediglich ein für die beiden gewählten Rohrdimensionen geeigneter Klemmring 500 eingesetzt werden. Das in den Figuren 9 und 10 dargestellte Verdrehsicherungselement 30 weist dieselben oder ähnliche Abmessungen wie das beispielsweise in Fig. 8 dargestellte Verdrehsicherungselement 30 auf. In den in Fig. 10 erkennbaren kreisförmigen Spalt 70 zwischen dem Verdrehsicherungselement 30 und dem zweiten Rohrelement 40 kann der zweite Bereich 504 des Klemmrings eingreifen. Bevorzugt ist der Spalt 70 im fertig zusammengebauten Zustand der Rohrverbindung 1 nach aussen durch den zweiten Bereich 504 des Klemmrings 500 geschlossen, wozu der Klemmring 500 gegebenenfalls eine Verlängerung, die im zusammengebauten Zustand den Spalt schliesst, aufweist.

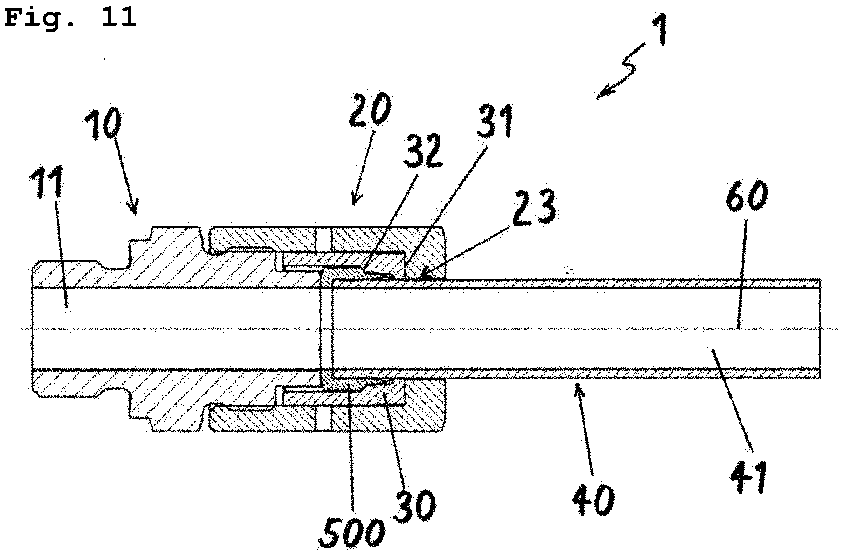

In Fig. 11 ist eine schematische Schnittdarstellung einer weiteren Ausführungsform der erfindungsgemässen Rohrverbindung 1 im zusammengebauten Zustand gezeigt. In dieser Ausführungsform wird die erste Widerlagerfläche 31 von der Stirnfläche des Verdrehsicherungselements 30 auf der der ersten Eingriffsstruktur 33 gegenüberliegenden Seite gebildet. Dadurch ist es beispielsweise möglich, die Widerlagerfläche 31 grösser als im Fall der ersten Ausführungsform auszubilden, sodass bei vergleichbarer Kraftwirkung die Flächenpressung zwischen der Widerlagerfläche 31 und dem Anschlusselement 20 im zusammengebauten Zustand geringer ist. Durch eine geringere Flächenpressung wird die Gefahr verringert, dass das Verdrehsicherungselement 30 und Anschlusselement 20 aneinander festfressen, da die wirkende Kraft auf eine grössere Fläche verteilt wird. Das Verdrehsicherungselement 30 weist keinen Bereich mit kleinerem Aussendurchmesser auf, der von der Durchgangsbohrung 23 des Anschlusselements 20 aufgenommen wird. Stattdessen ist die Durchgangsbohrung 23 bevorzugt an den Aussendurchmesser des zweiten Rohrelements 40 angepasst.

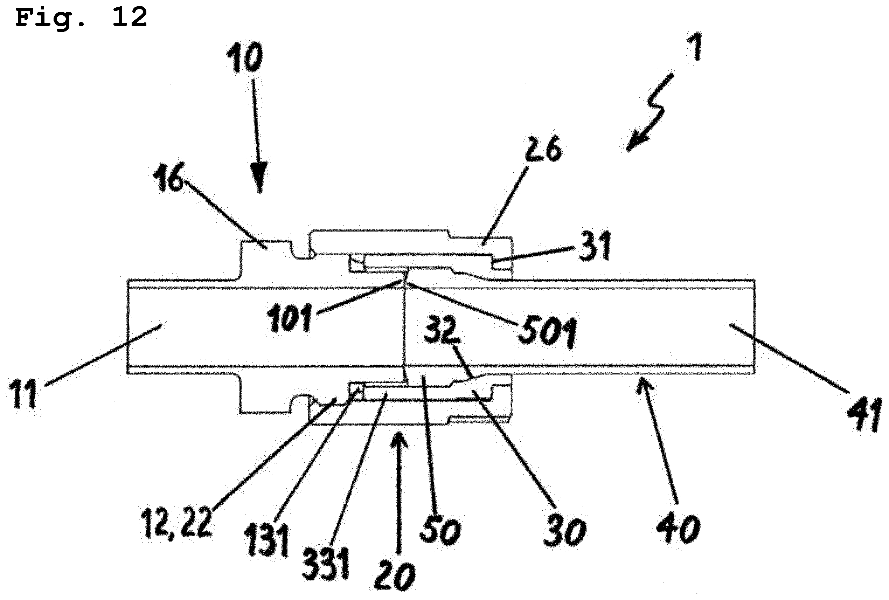

In Fig. 12 ist eine schematische Schnittdarstellung einer weiteren Ausführungsform der erfindungsgemässen Rohrverbindung 1 gezeigt. In dieser Ausführungsform ist kein Klemmring 500 vorgesehen. Stattdessen ist der Flansch 50 integral mit dem zweiten Rohrelement 40 ausgebildet. Zumindest in diesem Fall ist das zweite Rohrelement 40 insgesamt als Bestandteil der Rohrverbindung 1 zu betrachten. Bei dem zweiten Rohrelement 40 handelt es sich dabei beispielsweise um einen Anschweissnippel. Bei einem Anschweissnippel handelt es sich um ein Rohrelement, welches an seinem einen Ende 42 einen Flansch 50 aufweist und welches mit seinem anderen Ende mit einem weiteren Rohrelement verbunden werden kann, um dieses weitere Rohrelement mit dem Flansch 50 zu versehen. Das Verbinden des Anschweissnippels mit dem weiteren Rohrelement erfolgt dabei bevorzugt durch Schweissen, beispielsweise Orbitalschweissen.

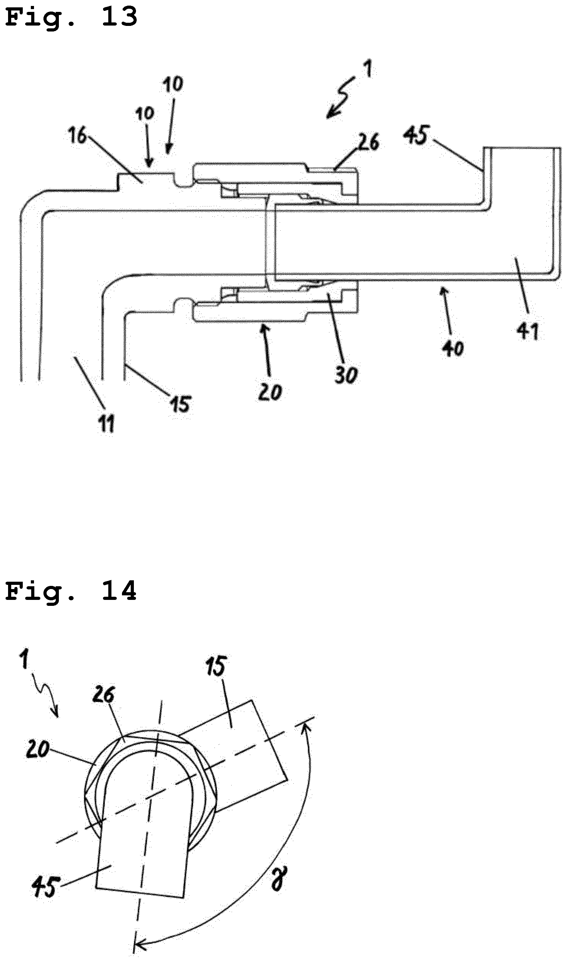

In Fig. 13 ist eine schematische Schnittdarstellung einer weiteren Ausführungsform der erfindungsgemässen Rohrverbindung 1 in einem handfest montierten Zustand gezeigt. In Fig. 14 ist eine Draufsicht einer Rohrverbindung 1 gemäss dieser Ausführungsform in einem handfest montierten oder zusammengebauten dargestellt. In dieser Ausführungsform handelt es sich bei dem ersten Rohrelement 10 und dem zweiten Rohrelement 40 um nicht rotationssymmetrisch ausgebildete Rohrelemente, konkret um gekrümmte Rohrelemente. Die gekrümmten Rohrelemente weisen jeweils einen gebogenen Schenkel 15, 45 auf. Die gebogenen Schenkel 15, 45 sind um einen Winkel γ gegeneinander verdreht; der Winkel γ ist in Fig. 14 eingezeichnet. Aufgrund der Verdrehbarkeit des zweiten Rohrelements 40 und des Verdrehsicherungselements 30 im ersten Zustand ist es möglich, die Rohrverbindung 1 so zusammenzubauen, dass jeder beliebige Winkel γ zwischen 0 und 360° eingestellt werden kann.

In einer Ausführungsform des erfindungsgemässen Verfahrens zum Verbinden eines ersten Rohrelements 10 und eines zweiten Rohrelements 40 einer erfindungsgemässen Rohrverbindung 1 wird zunächst der Klemmring 500 am Ende 42 des zweiten Rohrelements 40 angebracht. Nachfolgend werden das Verdrehsicherungselement 30 und das Anschlusselement 20 am zweiten Rohrelement 40 angebracht. Dies erfolgt beispielsweise, indem das Verdrehsicherungselement 30 und das Anschlusselement 20 auf das zweite Rohrelement 40 gesteckt oder geschoben werden. Nachfolgend werden das erste Rohrelement 10 und das zweite Rohrelement 40 zueinander positioniert, sodass die Dichtflächen 101, 501 einander gegenüberliegen oder einander berühren. Nachfolgend wird das Verdrehsicherungselement 30 mit dem ersten Rohrelement 10 in Eingriff gebracht, um eine Rotation des Verdrehsicherungselements 30 relativ zum ersten Rohrelement 10 zu verhindern, d.h. das Verdrehsicherungselement 30 und das Rohrelement 10 gegen ein Verdrehen relativ zueinander zu sichern. Das In-Eingriff-Bringen erfolgt dabei bevorzugt durch Verschieben des Verdrehsicherungselements 30 entlang des zweiten Rohrelements 40 in Richtung des ersten Rohrelements 10. Nachfolgend wird das Anschlusselement 20 mit dem ersten Rohrelement 10 der Art verbunden, dass das zweite Rohrelement 40 über den Flansch 50 mit dem ersten Rohrelement 10 verbunden ist. Dies erfolgt bevorzugt, indem das Anschlusselement 20 durch Aufschrauben handfest mit dem ersten Rohrelement 10 verbunden wird und dann angezogen wird, indem es durch 1 bis 3, beispielsweise 1¾ Umdrehungen weiter auf das erste Rohrelement 10 geschraubt wird. Das erste Rohrelement 10 und das zweite Rohrelement 40 sind dann dicht und druckbeständig miteinander verbunden und gegen ein Verdrehen relativ zueinander gesichert.

In einer alternativen Ausführungsform erfolgt das Anbringen des Klemmrings 500 auf dem zweiten Rohrelement nach dem Anbringen des Verdrehsicherungselements 30 und des Anschlusselements 20 auf dem zweiten Rohrelement 40.

Das Anbringen des Klemmrings 500 entfällt, wenn der Flansch 50 integral mit dem zweiten Rohrelement 40 gebildet ist.

In einer alternativen Ausführungsform erfolgt das Anbringen des Klemmrings 500, des Verdrehsicherungselements 30 und des Anschlusselements auf dem zweiten Rohrelement 40 mittels eines Vormontagegeräts. Dabei wird der Klemmring 500 auf das Ende 42 des zweiten Rohrelements gepresst. Zum Zusammenbauen der Rohrverbindung 1 wird das Anschlusselement 20 mit dem ersten Rohrelement 10 handfest verbunden. Anschliessend wird die Verbindung zwischen dem ersten Rohrelement 10 und dem Anschlusselement 20 angezogen, wodurch das erste Rohrelement 10 und das zweite Rohrelement 40 dicht und drucksicher miteinander verbunden und gegen ein Verdrehen relativ zueinander gesichert sind. Zum Nachziehen ist eine vergleichsweise geringe Drehbewegung ausreichend, vorzugsweise eine Viertelumdrehung des Anschlusselements 20 relativ zum ersten Rohrelement 10.

## Patentansprüche

1. Rohrverbindung (1), umfassend ein erstes Rohrelement (10) mit einem ersten Kanal (11) zur Durchleitung eines strömenden Mediums, ein Anschlusselement (20) und ein Verdrehsicherungselement (30),
**wobei** das Anschlusselement (20) ausgebildet ist, ein zweites Rohrelement (40), das einen zweiten Kanal (41) zum Durchleiten des strömenden Mediums aufweist, mit dem ersten Rohrelement (10) über einen am zweiten Rohrelement (40) vorgesehenen Flansch (50) dicht zu verbinden, sodass das strömende Medium zwischen dem ersten Kanal (11) und dem zweiten Kanal (41) strömen kann,
**wobei** das Verdrehsicherungselement (30) auf dem zweiten Rohrelement (40) anbringbar ist und ausgebildet ist, mit dem ersten Rohrelement (10) in Eingriff zu gelangen zum Verhindern einer Rotation des ersten Rohrelements (10) relativ zu dem zweiten Rohrelement (40), und
**wobei** in einem ersten Zustand, in dem das Verdrehsicherungselement (30) ausser Eingriff mit dem ersten Rohrelement (10) ist, das Verdrehsicherungselement (30) relativ zu dem zweiten Rohrelement (40) verdrehbar ist,
**dadurch gekennzeichnet, dass**
in einem zweiten Zustand, in dem das Verdrehsicherungselement (30) mit dem ersten Rohrelement (10) in Eingriff ist, das erste Rohrelement (10) mit dem zweiten Rohrelement (40) mittels des Anschlusselements (20) über den Flansch (50) so verbindbar ist, dass der Flansch (50) und damit das zweite Rohrelement (40) gegen ein Verdrehen relativ zum Verdrehsicherungselement (30) gesichert sind, und
dass das Verdrehsicherungselement (30) gegen ein Verdrehen relativ zum ersten Rohrelement (10) gesichert ist,
sodass das erste Rohrelement (10) und das zweite Rohrelement (40) gegen Verdrehen relativ zueinander gesichert sind.

2. Rohrverbindung gemäss Anspruch 1,
**wobei** der Flansch (50) von einem Klemmring (500) gebildet wird, welcher bevorzugt an dem dem ersten Rohrelement (10) zugewandten Ende (42) des zweiten Rohrelements (40) angebracht ist.

3. Rohrverbindung (1) gemäss Anspruch 2,
wobei der Klemmring (500) beim Verbinden des zweiten Rohrelements (40) mit dem ersten Rohrelement (10) in dem dem ersten Rohrelement (10) zugewandten Teilbereich nicht irreversibel verformt wird.

4. Rohrverbindung (1) gemäss Anspruch 1,
**wobei** im zweiten Zustand eine Innenfläche des Klemmrings (500) vom Verdrehsicherungselement (30) gegen eine Aussenfläche des zweiten Rohrelements (40) im Bereich des Endes (42) gepresst wird, um den Klemmring (500) am zweiten Rohrelement (40) zu fixieren, wenn das erste Rohrelement (10) und das zweite Rohrelement (40) miteinander verbunden sind, und
**wobei** der Klemmring (500) bevorzugt von einer Konusstruktur (34) des Verdrehsicherungselements (30) geklemmt wird.

5. Rohrverbindung (1) gemäss Anspruch 1,
**wobei** der Flansch (50) integral mit dem zweiten Rohrelement (40) gebildet ist, und
**wobei** das zweite Rohrelement (40) vorzugsweise ein Anschweissnippel und/oder Verbindungsnippel ist.

6. Rohrverbindung gemäss einem der vorgenannten Ansprüche,
**wobei** in dem ersten Zustand das Verdrehsicherungselement (30) entlang wenigstens eines Teils des zweiten Rohrelements (40) verschiebbar ist.

7. Rohrverbindung (1) gemäss einem der vorgenannten Ansprüche,
**wobei** das Verdrehsicherungselement (30) ringförmig ausgebildet ist und
**wobei** das Verdrehsicherungselement (30) eine erste Eingriffsstruktur (33), bevorzugt in einer axialen Richtung vorgesehene Vorsprünge (331) und/oder Vertiefungen aufweist, die mit einer an dem ersten Rohrelement (10) vorgesehenen zweiten Eingriffsstruktur (13), die bevorzugt komplementäre Vertiefungen (131) und/oder Vorsprünge aufweist, zusammenwirken können.

8. Rohrverbindung (1) gemäss Anspruch 7,
**wobei** die erste Eingriffsstruktur (33) und die zweite Eingriffsstruktur (13) durch Verschieben des Verdrehsicherungselements (30) entlang des zweiten Rohrelements (40) in Richtung der zweiten Eingriffsstruktur (13) in Eingriff gebracht werden können.

9. Rohrverbindung (1) gemäss einem der vorgenannten Ansprüche, **wobei** das Verdrehsicherungselement (30) eine erste Widerlagerfläche (31) aufweist, gegen die im zweiten Zustand das Anschlusselement (20) drückt, und
**wobei** das Verdrehsicherungselement (30) eine zweite Widerlagerfläche (32) aufweist, die im zweiten Zustand gegen den Flansch (50) drückt.

10. Rohrverbindung (1) gemäss einem der vorgenannten Ansprüche,
**wobei** das Anschlusselement (20) relativ zu dem Verdrehsicherungselement (30) bis zum Erreichen einer festen Verbindung zwischen dem ersten Rohrelement (10) und dem zweiten Rohrelement (40) verdrehbar ist,
**wobei** bevorzugt ein zum Drehen des Anschlusselements (20) einwirkendes Drehmoment nicht auf das zweite Rohrelement (40) übertragen wird.

11. Rohrverbindung (1) gemäss einem der vorgenannten Ansprüche,
**wobei** eine dichte Verbindung zwischen dem ersten Rohrelement (10) und dem zweiten Rohrelement (40) wieder gelöst werden kann, um das erste Rohrelement (10) und das zweite Rohrelement (40) voneinander zu trennen, und
**wobei** das erste Rohrelement (10) und das zweite Rohrelement (40) nach dem Lösen wieder dicht miteinander verbunden werden können,
**wobei** das Lösen und Wiederverbinden bevorzugt wiederholbar ist,
**wobei** das derartig wiederholbare Lösen und Wiederverbinden mehr bevorzugt mindestens zwanzigmal wiederholbar ist.

12. Rohrverbindung (1) gemäss einem der vorgenannten Ansprüche, **wobei** das Anschlusselement (20) eine zweite Verbindungsstruktur (22) aufweist, die ausgebildet ist, mit einer am ersten Rohrelement (10) vorgesehenen ersten Verbindungsstruktur (12) zusammenzuwirken,
**wobei** vorzugsweise das Anschlusselement (20) relativ zu dem ersten Rohrelement (10) und dem zweiten Rohrelement (40) verschiebbar ist, solange die erste und die zweite Verbindungsstruktur (12, 22) nicht zusammenwirken.

13. Rohrverbindung (1) gemäss Anspruch 10,
**wobei** das Anschlusselement (20) als Überwurfmutter ausgebildet ist und wobei die erste und die zweite Verbindungsstruktur (12, 22) ein Gewinde sind.

14. Rohrverbindung (1) gemäss einem der vorgenannten Ansprüche,
**wobei** das erste Rohrelement (10) eine erste plane Dichtfläche (101) umfasst,
**wobei** der Flansch (50) eine zweite plane Dichtfläche (501) umfasst, die im verbundenen Zustand des ersten Rohrelements (10) und des zweiten Rohrelements (40) dicht an der ersten Dichtfläche (101) anliegt,
**wobei** vorzugsweise die erste Dichtfläche (101) und die zweite Dichtfläche (501) metallisch sind und/oder
**wobei** vorzugsweise die erste und/oder die zweite Dichtfläche (101, 501) beschichtet sind, vorzugsweise mit einer auf PTFE basierenden Beschichtung.

15. Rohrverbindung (1) gemäss einem der vorgenannten Ansprüche,
**wobei** die Rohrverbindung (1) das zweite Rohrelement (40) umfasst.

16. Verfahren zum Verbinden eines ersten Rohrelements (10) und eines zweiten Rohrelements (40) einer Rohrverbindung (1) gemäss einem der Ansprüche 1 bis 15, mit den Schritten:
- Anbringen des Anschlusselements (20) und des Verdrehsicherungselements (30) auf dem zweiten Rohrelement (40),
- Positionieren des ersten und des zweiten Rohrelements (10, 40) zueinander,
- In-Eingriff-Bringen des Verdrehsicherungselements (30) mit dem ersten Rohrelement (10) zum Verhindern einer Rotation des ersten Rohrelements (10) relativ zu dem zweiten Rohrelement (40),
- Verbinden des Anschlusselements (20) mit dem ersten Rohrelement (10), derart,
dass das zweite Rohrelement (40) über den Flansch (50) mit dem ersten Rohrelement (10) verbunden ist,
dass der Flansch (50) und damit das zweite Rohrelement (40) gegen ein Verdrehen relativ zum Verdrehsicherungselement (30) gesichert sind, und dass das Verdrehsicherungselement (30) gegen ein Verdrehen relativ zum ersten Rohrelement (10) gesichert ist,
sodass das erste Rohrelement (10) und das zweite Rohrelement (40) gegen ein Verdrehen relativ zueinander gesichert sind.

17. Verfahren gemäss Anspruch 16,
ferner umfassend den Schritt des Anbringens eines Klemmrings (500) am zweiten Rohrelement (40) zum Bilden des Flanschs (50).

18. Verfahren gemäss einem der Ansprüche 16 oder 17,
wobei zum Positionieren das zweite Rohrelement (40) in axialer und/oder in radialer Richtung zur Rohrachse an das erste Rohrelement (10) hinbewegt wird.
